# EUROPEAN PATENT APPLICATION

(11) **EP 4 278 902 A1**
(43) Date of publication of application: **22.11.2023**
(21) Application number: 22739761.9
(22) Date of filing: 14.01.2022
(51) Int. Cl.: A23L 3/36, A23L 13/00, A23L 19/00, A23L 29/212, A23P 30/00, A23L 5/10, A23L 23/00

(54) **METHOD FOR MANUFACTURING FROZEN BLOCK, FROZEN BLOCK, AND FROZEN FOOD**

(30) Priority: 15.01.2021 KR 20210006341
(71) Applicant: CJ Cheiljedang Corporation, Seoul 04560 (KR)
(72) Inventor: JUNG, Kyung Hun, Seoul 04560 (KR); KANG, Dae Ik, Seoul 04560 (KR); CHO, Gun Ae, Seoul 04560 (KR); KIM, Sim Hae, Seoul 04560 (KR); PARK, Sae Mi, Seoul 04560 (KR)
(74) Representative: Cabinet Laurent & Charras
(86) International application number: PCT/KR2022/000723
(87) International publication number: WO 2022/154569

(57) **Abstract**

The present disclosure relates to a method for manufacturing a frozen block, comprising: (A) mixing meat, salts, vegetables, and alpha starch; (B) forming the mixture; (C) steaming the formed product; and (D) freezing the steamed formed product; a frozen block comprising meat, salts, vegetables, and alpha starch in which the meat and vegetables are attached to each other, wherein when the frozen block is placed in water, irradiated by a microwave of 2.45 GHz and 700 W for 2 minutes, and stirred, 80 wt% or more of the meat and vegetables, based on the total weight of the frozen block including the meat and vegetables, are detached from each other within 1 minute immediately after stirring; a frozen food comprising a frozen block, wherein the frozen block comprises meat, salts, vegetables, and alpha starch in which the meat and vegetables are attached to each other, and wherein when the frozen block is placed in water, irradiated by a microwave of 2.45 GHz and 700 W for 2 minutes, and stirred, 80 wt% or more of the meat and vegetables, based on the total weight of the frozen block including the meat and vegetables, are detached from each other within 1 minute immediately after stirring; and a frozen food for microwave cooking in which a frozen block, a frozen sauce, and a frozen solid product are contained in a predetermined container, wherein the frozen block comprises meat, salts, vegetables, and alpha starch in which the meat and vegetables are attached to each other, and wherein when the frozen food is cooked by placing the frozen block in water in the container followed by irradiation by a microwave.

## Description

### TECHNICAL FIELD

### Cross-reference to Related Applications

This application claims the benefit of Korean Patent Application No. 10-2015-0169172, filed on November 30, 2015, in the Korean Intellectual Property Office, the disclosure of which is incorporated herein in its entirety by reference.

### Technical Field

The present disclosure relates to a method for manufacturing a frozen block, a frozen block, and a frozen food.

### BACKGROUND ART

A frozen food refers to a food that has been rapidly frozen at a sub-zero temperature for the purpose of long-term preservation of prepared, processed, or cooked food. With an increase in the number of single-person households and changes in dietary patterns, the demand of consumers for the frozen food is on the increase.

While such frozen food should be able to be easily cooked to be consumed and be convenient to consume, it should be also able to maintain a moisture content and have microbial stability during frozen storage to enable maintenance of taste quality and maintenance of freshness even after it is thawed.

In the frozen food described above, the main ingredients contained in the corresponding food are important; however, as sauces, garnishes, seasonings, etc. which are included as sub-ingredients, are easily cooked at the same time as the main ingredients, demands for preservation, *etc*. stability are increasing.

Korean Patent Application Publication No. 10-2004-0019431 relates to a freeze-dried vegetable block, in which the shape of the radish is not deformed, the texture is excellent, and the sensory is excellent even after drying, there is a high possibility that the freeze-dried vegetable block may have problems in that it may require a pretreatment process (*e.g*., boiling materials, immersing materials in a sugar solution, *etc*.) for its preparation, the shape (form) may collapse during steaming after forming due to the lack of attachment between the raw materials, and the loosening properties of the vegetable block even after the prepared vegetable block is thawed for consumption.

Therefore, studies have been continuously conducted on frozen food including a frozen block, which has an excellent loosening property during cooking using microwaves, while increasing the attachment force between raw materials to increase the shape retaining ability even during steaming.

### [Prior Art Documents]

Korean Patent Application Publication No. 10-2004-0019431

### DISCLOSURE OF THE INVENTION

### TECHNICAL PROBLEM

The present disclosure provides a method for manufacturing a frozen block, in which the block does not collapse even after steaming by enhancing the attachment force of raw materials (especially meat and vegetables) in manufacturing frozen blocks provided for a frozen food, thus having an excellent shape retaining ability, and has an excellent loosening property of the frozen block after cooking using microwaves, thus allowing uniform mixing of garnish throughout the food; and a frozen block prepared as such.

Additionally, the present disclosure provides a frozen food including the frozen block and a frozen food for microwave cooking including the frozen block.

### TECHNICAL SOLUTION

### Method for manufacturing frozen block

Hereinafter, a method for manufacturing a frozen block according to an aspect of the present disclosure will be described.

An aspect of the present disclosure may provide a method for manufacturing a frozen block, which includes (A) mixing meat, salts, vegetables, and alpha starch; (B) forming the mixture; (C) steaming the formed product; and (D) freezing the steamed formed product.

Such method for manufacturing a frozen block of the present disclosure may be one in which the frozen block (meat and vegetables can easily be detached from each other) is prepared through a four-step process of (A) mixing raw materials /(B) forming/(C) steaming/ and (D) freezing. According to the method for manufacturing a frozen block of the present disclosure, it is possible to increase the attachment force between the raw materials by way of using meat and salts together thus having an excellent shape (form) retaining ability even after steaming, and having excellent a loosening property by adjusting the mixture of meat and alpha starch when cooking the frozen block in a microwave oven.

In an embodiment, Step (A) above, which is a step of mixing raw materials, may include (a-1) mixing meat and salts to form a first raw material; (a-2) forming a second raw material by mixing vegetables with the first raw material; and (a-3) mixing alpha starch with the second raw material.

In Step (A) (or Step (a-1)) above, the meat may include beef, pork, lamb, goat meat, rabbit meat, horse meat, venison, chicken, duck, turkey, a mixture thereof, etc. Among them, from the aspect of the functionality of processed meat, the meat may include beef and pork, but is not limited thereto.

In Step (A) (or Step (a-1)) above, the salts may include salt (sodium chloride), a salt-containing seasoning (*e.g*., IG, *etc*.), bittern (magnesium chloride), calcium sulfate, potassium sulfate, or a mixture thereof. Although the types of salts have been listed as above, the salts are not limited thereto, and any conventional salts used in food can be used without limitation.

Step (a-1) above may be a step of mixing meat and salts to form a first raw material in which an attaching component including salt-soluble protein is formed.

The salt-soluble protein, which is a protein that accounts for about 50% of meat, may also be referred to as a myofibrillar protein, and may be a protein mainly composed of myosin and actin. The salt-soluble protein may have the role of improving the texture by increasing the water holding capacity and attachment force of the meat.

The salt-soluble protein has a property of being soluble in salt water, and when meat and salts are mixed in Step (a-1) above, the salt-soluble protein contained in the meat is eluted, thereby increasing the water holding capacity and attachment force of the meat.

The time for mixing meat and salts in Step (a-1) above may be in the range selected from the group consisting of one lower limit selected from 3 minutes, 3.1 minutes, 3.2 minutes, 3.3 minutes, 3.4 minutes, 3.5 minutes, 3.6 minutes, 3.7 minutes, 3.8 minutes, 3.9 minutes, 4 minutes, 4.1 minutes, 4.2 minutes, 4.3 minutes, 4.4 minutes, 4.5 minutes, 4.6 minutes, 4.7 minutes, 4.8 minutes, 4.9 minutes, and 5 minutes, and one upper limit selected from 10 minutes, 9.9 minutes, 9.8 minutes, 9.7 minutes, 9.6 minutes, 9.5 minutes, 9.4 minutes, 9.3 minutes, 9.2 minutes, 9.1 minutes, 9 minutes, 8.8 minutes, 8.6 minutes, 8.4 minutes, 8.2 minutes, 8 minutes, 7.8 minutes, 7.6 minutes, 7.4 minutes, 7.2 minutes, 7 minutes, 6.8 minutes, 6.6 minutes, 6.4 minutes, 6.2 minutes, and 6 minutes; and specifically, the time may be 3 to 10 minutes, 3.5 to 9 minutes, 4 to 8 minutes, 5 to 7 minutes, or 5 to 6 minutes. When the time for mixing the meat and salts satisfies the above range, the attachment force between meat and vegetables may be improved due to the salt-soluble protein contained in the meat, water holding capacity may be improved, and thus the shape retaining ability may be improved even after steaming.

After mixing the meat and salt in Step (a-1) above, a step of stirring may further be included. As the stirring step is included, the attachment components including the salt-soluble protein can easily be eluted, but the stirring step is not essential.

In Step (A) (or Step (a-1)) above, the meat may be contained in an amount range selected from the group consisting of one lower limit selected among 10 wt%, 10.5 wt%, 11 wt%, 11.5 wt%, 12 wt%, 12.5 wt%, 13 wt%, 13.5 wt%, 14 wt%, 14.5 wt%, 15 wt%, 15.5 wt%, 16 wt%, 16.5 wt%, and 17 wt%, and one upper limit selected among 25 wt%, 24.5 wt%, 24 wt%, 23.5 wt%, 23 wt%, 22.5 wt%, 22 wt%, 21.5 wt%, 21 wt%, 20.5 wt%, and 20 wt%, based on the total weight of the frozen block. For example, the meat may be contained in an amount of 10 wt% to 25 wt%, 12 wt% to 24 wt%, 13 wt% to 23 wt%, 15 wt% to 20 wt%, 17 wt% to 20 wt%, or 10 wt% to 20 wt%. When the content of the meat satisfies the above range, the frozen block has the effects of retaining its shape without collapsing even after steaming due to an excellent attachment force, and having an excellent loosening property after cooking using microwaves.

In the present disclosure, the loosening property refers to a degree that the attached meat and vegetables are detached from each other. When the frozen block is placed in water and stirred after irradiating with a microwave of 2.45 GHz and 700 W for 2 minutes, if 80 wt% or higher of the meat and vegetables (based on the total weight of the frozen block including the meat and vegetables) are detached from each other within 1 minute immediately after stirring (i.e., within 1 minute after stirring is started), it can be seen that the loosening property is excellent. In this case, the water, which includes edible water, may be water at 95°C or higher at atmospheric pressure (or boiling water). The stirring speed may be in a range of 85 rpm to 90 rpm.

In Step (A) (or Step (a-1)) above, the salts may be contained in an amount range selected from the group consisting of one lower limit selected among 1 wt%, 1.1 wt%, 1.2 wt%, 1.3 wt%, 1.4 wt%, 1.5 wt%, 1.6 wt%, 1.7 wt%, 1.8 wt%, 1.9 wt%, 2 wt%, 2.1 wt%, and 2.2 wt%, and one upper limit selected among 5 wt%, 4.9 wt%, 4.8 wt%, 4.7 wt%, 4.6 wt%, 4.5 wt%, 4.4 wt%, 4.3 wt%, 4.2 wt%, 4.1 wt%, 4 wt%, 3.9 wt%, 3.8 wt%, 3.7 wt%, 3.6 wt%, 3.5 wt%, 3.4 wt%, 3.3 wt%, 3.2 wt%, 3.1 wt%, 3 wt%, 2.9 wt%, 2.8 wt%, 2.7 wt%, 2.6 wt%, 2.5 wt%, based on the total weight of the frozen block. Specifically, the salts may be contained in an amount of 1 wt% to 5 wt%, 1.5 wt% to 4 wt%, 1.7 wt% to 3.5 wt%, 2 wt% to 4 wt%, 2 wt% to 3.5 wt%, 2 wt% to 3 wt%, or 2.2 wt% to 2.7 wt%, based on the total weight of the frozen block. When the salt content satisfies the above range, the frozen block has an excellent attachment force without being collapsed even after steaming thus having excellent formability.

In Step (A) (or Step (a-1)) above, the meat and the salts may be contained in a weight ratio range selected from the group consisting of one lower limit selected among 2:1, 2.1:1, 2.2:1, 2.3:1, 2.4:1, 2.5:1, 2.6:1, 2.7:1, 2.8:1, 2.9:1, 3:1, 3.1:1, 3.2:1, 3.3:1, 3.4:1, 3.5:1, 3.6:1, 3.7:1, 3.8:1, 3.9:1, 4:1, 4.1:1, 4.2:1, 4.3:1, 4.4:1, 4.5:1, 4.6:1, 4.7:1, 4.8:1, 4.9:1, 5:1, 5.1:1, 5.2:1, 5.3:1, 5.4:1, 5.5:1, 5.6:1, 5.7:1, 5.8:1, 5.9:1, and 6:1, and one upper limit selected among 20:1, 19.5:1, 19:1, 18.5:1, 18:1, 17.5:1, 17:1, 16.5:1, 16:1, 15.5:1, 15:1, 14.5:1, 14:1, 13.9:1, 13.8:1, 13.7:1, 13.6:1, 13.5:1, 13.4:1, 13.3:1, 13.2:1, 13.1:1, 13:1, 12.9:1, 12.8:1, 12.7:1, 12.6:1, 12.5:1, 12.4:1, 12.3:1, 12.2:1, 12.1:1, 12:1, 11.9:1, 11.8:1, 11.7:1, 11.6:1, 11.5:1, 11.4:1, 11.3:1, 11.2:1, 11.1:1, 11:1, 10.9:1, 10.8:1, 10.7:1, 10.6:1, 10.5:1, 10.4:1, 10.3:1, 10.2:1, 10.1:1, and 10:1. Specifically, the meat and the salts may be contained in a weight ratio of 2:1 to 20:1, 3:1 to 15:1, 3.5 to 13:1, 2:1 to 12:1, 3:1 to 12:1, 5:1 to 20:1, 5.5:1 to 15:1, or 5:1 to 10:1. When the mixed weight ratio of the meat and the salts satisfies the above range, the frozen block has an effect of an excellent attachment force, and thus does not collapse after steaming.

The meat may be in a form in which any one or more of width, length, and height is cut to a range of one lower limit selected among 0.1 mm or greater, 0.2 mm or greater, 0.3 mm or greater, 0.4 mm or greater, 0.5 mm or greater, 0.6 mm or greater, 0.7 mm or greater, 0.8 mm or greater, 0.9 mm or greater, 1 mm or greater, 1.1 mm or greater, 1.2 mm or greater, 1.3 mm or greater, 1.4 mm or greater, 1.5 mm or greater, 1.6 mm or greater, 1.7 mm or greater, 1.8 mm or greater, 1.9 mm or greater, 2 mm or greater, 2.1 mm or greater, 2.2 mm or greater, 2.3 mm or greater, 2.4 mm or greater, 2.5 mm or greater, 2.6 mm or greater, 2.7 mm or greater, 2.8 mm or greater, 2.9 mm or greater, 3 mm or greater, 3.1 mm or greater, 3.2 mm or greater, 3.3 mm or greater, 3.4 mm or greater, 3.5 mm or greater, 3.6 mm or greater, 3.7 mm or greater, 3.8 mm or greater, 3.9 mm or greater, 4 mm or greater, 4.1 mm or greater, 4.2 mm or greater, 4.3 mm or greater, 4.4 mm or greater, 4.5 mm or greater, 4.6 mm or greater, 4.7 mm or greater, 4.8 mm or greater, 4.9 mm or greater, and 5 mm or greater, but these are exemplary and the three-dimensional size (width × length × height) of vegetables described above is not limited thereto.

Alternatively, the meat may be in a form in which any one or more of width, length, and height is cut to a range selected among one upper limit selected among 15 mm or less, 14.9 mm or less, 14.8 mm or less, 14.7 mm or less, 14.6 mm or less, 14.5 mm or less, 14.4 mm or less, 14.3 mm or less, 14.2 mm or less, 14.1 mm or less, 14 mm or less, 13.9 mm or less, 13.8 mm or less, 13.7 mm or less, 13.6 mm or less, 13.5 mm or less, 13.4 mm or less, 13.3 mm or less, 13.2 mm or less, 13.1 mm or less, 13 mm or less, 12.9 mm or less, 12.8 mm or less, 12.7 mm or less, 12.6 mm or less, 12.5 mm or less, 12.4 mm or less, 12.3 mm or less, 12.2 mm or less, 12.1 mm or less, and 12 mm or less.

Even when the three-dimensional size (width × length × height) of the meat of the present disclosure is larger than that of ground meat, it has a high attachment property; therefore, it has an excellent shape retaining ability even after steaming and the texture can be improved.

In Step (A) (or Step (a-1)) above, a step of adding spices including garlic, ginger, black pepper, herbs, or a mixture thereof may be further included. The spices are intended to improve the texture of the frozen block or to add a flavor and/or fragrance. When the spices are mixed with the meat and the salts, it is possible to improve the water holding capacity of the meat, and play the role of enabling the attachment in a state containing moisture when meat and vegetables are attached. Although examples of the spices have been listed as above, but the spices are not limited thereto, and any conventional spices used in food may be used without limitation.

The spices may be added in an amount range selected from the group consisting of one lower limit selected among 1 wt%, 1.1 wt%, 1.2 wt%, 1.3 wt%, 1.4 wt%, 1.5 wt%, 1.6 wt%, 1.7 wt%, 1.8 wt%, 1.9 wt%, 2 wt%, 2.1 wt%, 2.2 wt%, 2.3 wt%, 2.4 wt%, 2.5 wt%, 2.6 wt%, 2.7 wt%, 2.8 wt%, 2.9 wt%, 3 wt%, 3.1 wt%, 3.2 wt%, 3.3 wt%, 3.4 wt%, 3.5 wt%, 3.6 wt%, 3.7 wt%, 3.8 wt%, and 3.9 wt%, and one upper limit 5 wt%, 4.9 wt%, 4.8 wt % , 4.7 wt%, 4.6 wt%, 4.5 wt%, 4.4 wt%, 4.3 wt%, 4.2 wt%, 4.1 wt%, and 4 wt%, based on the total weight of the frozen block. Specifically, the spices may be added in an amount of 1 wt% to 5 wt%, 1.1 wt% to 4 wt%, 1.5 wt% to 5 wt%, 2 wt% to 5 wt%, 3 wt% to 5 wt%, 3 wt% to 4 wt%, 3.5 wt% to 5 wt%, or 3.6 wt% to 4 wt%. When the content of the spices satisfies the above range, the texture, flavor and/or fragrance of the frozen block may be improved, or the water holding capacity of the meat may be increased.

The spices may be added as is or may be added in a processed state. For example, the spices may be added in a pulverized form, without being limited thereto.

Step (a-2) above is a step of forming a second raw material by mixing vegetables with the first raw material formed in Step (a-1) above, since the first raw material contains an attachment component including a salt-soluble protein as described above. That is, the second raw material may include a raw material in a form in which the meat and the vegetables are attached by the attachment component including the salt-soluble protein formed in Step (a-1) above.

In Step (A) (or Step (a-2)) above, the vegetables may include all of edible herbaceous cultivated plants, and may include all of leaf vegetables, stem vegetables, root vegetables, fruit vegetables, and/or flower vegetables, and more specifically, the vegetables may be green onion, leek, chives, onion, red pepper, radish, lotus root, carrot, deodeok, zucchini, balloon flower root, water dropwort, eggplant, bell pepper, mushroom, Chinese cabbage, cabbage, mugwort, spinach, or a mixture thereof. Alternatively, the vegetables may include foods that can be prepared using the vegetables (e.g., kimchi). Examples of the vegetables have been listed as above, but are not limited thereto, and any edible vegetable or foods prepared using vegetables can be used without limitation.

The vegetables added in Step (A) (or Step (a-2)) above may be in a form in which any one or more of width, length, and height is 5 mm or greater, and more specifically, cut to a range selected among one lower limit consisting of 5.1 mm or greater, 5.2 mm or greater, 5.3 mm or greater, 5.4 mm or greater, 5.5 mm or greater, 5.6 mm or greater, 5.7 mm or greater, 5.8 mm or greater, 5.9 mm or greater, 6 mm or greater, 6.1 mm or greater, 6.2 mm or greater, 6.3 mm or greater, 6.4 mm or greater, 6.5 mm or greater, 6.6 mm or greater, 6.7 mm or greater, 6.8 mm or greater, 6.9 mm or greater, 7 mm or greater, 7.1 mm or greater, 7.2 mm or greater, 7.3 mm or greater, 7.4 mm or greater, 7.5 mm or greater, 7.6 mm or greater, 7.7 mm or greater, 7.8 mm or greater, 7.9 mm or greater, 8 mm or greater, 8.1 mm or greater, 8.2 mm or greater, 8.3 mm or greater, 8.4 mm or greater, 8.5 mm or greater, 8.6 mm or greater, 8.7 mm or greater, 8.8 mm or greater, 8.9 mm or greater, 9 mm or greater, 9.1 mm or greater, 9.2 mm or greater, 9.3 mm or greater, 9.4 mm or greater, 9.5 mm or greater, 9.6 mm or greater, 9.7 mm or greater, 9.8 mm or greater, 9.9 mm or greater, and 10 mm or greater. In general, it is more advantageous to have small-sized vegetables for sufficient attachment of meat and vegetables. However, in the vegetables within the frozen block according to the present disclosure, even if at least one of the width and length of vegetables is larger than the general size for attachment by 5 mm or more, vegetables can be sufficiently bound to meat through a particular combination of components of the present disclosure, and thus the formed shape before steaming can be maintained even after steaming.

Alternatively, the vegetables are in a form in which any one or more of width, length, and height is cut to a range selected from one upper limit selected among 15 mm or less, 14.9 mm or less, 14.8 mm or less, 14.7 mm or less, 14.6 mm or less, 14.5 mm or less, 14.4 mm or less, 14.3 mm or less, 14.2 mm or less, 14.1 mm or less, 14 mm or less, 13.9 mm or less, 13.8 mm or less, 13.7 mm or less, 13.6 mm or less, 13.5 mm or less, 13.4 mm or less, 13.3 mm or less, 13.2 mm or less, 13.1 mm or less, 13 mm or less, 12.9 mm or less, 12.8 mm or less, 12.7 mm or less, 12.6 mm or less, 12.5 mm or less, 12.4 mm or less, 12.3 mm or less, 12.2 mm or less, 12.1 mm or less, and 12 mm or less.

For example, the vegetables may be in a form in which any one or more of width, length, and height is cut to a range of 5 mm to 15 mm, 6 mm to 15 mm, 7 mm to 15 mm, 8 mm to 15 mm, 9 mm to 15 mm, 6 mm to 14 mm, 7 mm to 14 mm, or 8 mm to 14 mm, but is not limited thereto.

When two or more kinds of vegetables are included in the frozen block, any one or more of the width, length, and height of one or more kinds of the two or more kinds of vegetables may correspond to the above size range, and two or more kinds of vegetables may satisfy the above range.

In Step (a-2) above, the time for mixing vegetables with the first raw material may be 2 minutes or less, or 1.9 minutes or less, 1.8 minutes or less, 1.7 minutes or less, 1.6 minutes or less, 1.5 minutes or less, for example, may be 1 to 2 minutes, specifically, may be 1.5 minutes to 2 minutes. When the time for mixing vegetables with the first raw material satisfies the above range, the attachment force between meat and vegetables can be improved, and the moisture of vegetables is not removed, the physical properties of the frozen block can be improved.

In Step (a-2) above, after mixing the vegetables with the first raw material, a step of stirring may be further included. As the stirring step is included, the attachment component containing the salt-soluble protein can allow the vegetables and meat to be attached more uniformly and rapidly.

In Step (A) (or Step (a-2)) above, the vegetables may be contained in a content range selected from the group consisting of one lower limit selected among 60 wt% or more, 61 wt% or more, 62 wt% or more, 63 wt% or more, 64 wt% or more, 65 wt% or more, 66 wt% or more, 67 wt% or more, 68 wt% or more, 69 wt% or more, and 70 wt% or more, and one upper limit selected among 80 wt% or less, 79 wt% or less, 78 wt% or less, 77 wt% or less, 76 wt% or less, 75 wt% or less, 74 wt% or less, 73 wt% or less, 72 wt% or less, and 71 wt% or less, based on the total weight of the frozen block. Specifically, the vegetables may be contained in an amount of 60 wt% or more and less than 80 wt%, 65 wt% or more and less than 80 wt%, 67 wt% or more and less than 80 wt%, 70 wt% or more and less than 80 wt%, 60 wt% to 79 wt%, 67 wt% to 79 wt%, or 70 wt% to 77 wt%, based on the total weight of the frozen block. When the content of the vegetables satisfies the above range, the block shape does not collapse after the frozen block is steamed and the attachment force with the meat can be maintained.

Step (a-3) above is a step of mixing alpha starch with the second raw material formed in Step (a-2) above to form a mixture, in which the alpha starch plays the role of further strengthening the attachment force between meat and vegetables, which are the main ingredients of the second raw material, may also play the role of attaching moisture together when attaching meat and vegetables, and thus can play the role of maintaining the shape of the formed product after steaming, or can increase the loosening property when performing microwave cooking for consumption.

The alpha starch is a concept including gelatinized starch which is prepared such that a starch dispersion, that is formed by adding water to starch followed by increasing the temperature by heating, is dry powdered by dehydrating the transparent or milky white colloidal solution with high viscosity, and may refer to starch, in which the regular crystal state of the glucose chains is loosened and released, and hydrogen bonds between the glucose chains are broken so that the molecules become smaller or the molecules become distant from each other. Such alpha starch has a high water holding capacity at room temperature and a high gelatinization temperature, and thus can maintain the shape of the formed product better during the steaming process of the formed product of a frozen block, compared to other types of starch.

In Step (A) (or Step (a-3)) above, the alpha starch may include corn alpha starch, waxy corn alpha starch, alpha rice flour, alpha tapioca starch, a mixture thereof, etc.

In (A) (or Step (a-3)) above, the alpha starch may be contained in a content range selected from the group consisting of one lower limit selected from 0.1 wt%, 0.2 wt%, 0.3 wt%, 0.4 wt%, 0.5 wt%, 0.6 wt%, 0.7 wt%, 0.8 wt%, 0.9 wt%, 1 wt%, 1.1 wt%, 1.2 wt%, 1.3 wt%, 1.4 wt%, 1.5 wt%, 1.6 wt%, 1.7 wt%, and 1.8 wt%, one upper limit selected from 10 wt%, 9 wt % , 8 wt%, 7 wt%, 6 wt%, 5 wt%, 4 wt%, 3 wt%, 2 wt%, 1.9 wt%, and 1.8 wt%, based on the total weight of the frozen block. Specifically, the alpha starch may be contained in a content range of 0.1 wt% to 10 wt%, 0.1 wt% to 8 wt%, 0.5 wt% to 7 wt%, 1 wt% to 5 wt%, 1.5 wt% to 2 wt%, or 1.7 wt% to 2 wt%, based on the total weight of the frozen block. When the content of the alpha starch satisfies the above range, the attachment force can be improved, and thus the formed product has the effect of maintaining its shape without being collapsed after steaming.

In (A) (or Step (a-3)) above, the meat and the alpha starch may be contained in a weight ratio range selected from the group consisting of one lower limit selected among 1:1, 1.5:1, 2:1, 2.5:1, 3:1, 3.5:1, 4:1, 4.5:1, 5:1, 5.5:1, 6:1, 6.5:1, 7:1, 7.5:1, and 8:1, and one upper limit selected among 25:1, 24:1, 23:1, 22:1, 21:1, 20:1, 19:1, 18:1, 17:1, 16:1, 15:1, 14:1, 13:1, 12:1, 11:1, and 10:1. Specifically, the meat and the alpha starch may be mixed in a weight ratio of 1:1 to 25:1, 2:1 to 20:1, 3:1 to 15:1, 5:1 to 12:1, or 6:1 to 10:1. When the mixed weight ratio of the meat and the alpha starch satisfies the above range, if the frozen block is placed in water and stirred after irradiating with a microwave of 2.45 GHz and 700 W for 2 minutes, if 80 wt% or higher of the meat and vegetables (based on the total weight of the frozen block including the meat and vegetables) can be detached from each other within 1 minute immediately after stirring, and thus the loosening property can be excellent.

In Step (a-3)) above, the time for mixing the alpha starch with the second raw material may be 2 minutes or less, or may be 1.9 minutes or less, 1.8 minutes or less, 1.7 minutes or less, 1.6 minutes or less, or 1.5 minutes or less, for example, 1 to 2 minutes, and specifically 1 minute 30 seconds to 2 minutes. When the time for mixing the alpha starch with the second raw material satisfies the above range, it is easy to form the prepared mixture, and the prepared mixture can be well separated from the mold, and the attachment force between meat and vegetables is improved even when steaming such a formed product, and thus the shape may not collapse.

Step (B) above is a step of forming the mixture formed in Step (A) (or Step (a-3)) above, and may include forming the mixture into various three-dimensional shapes.

For example, Step (B) above may be a step of forming the mixture into a block type with a spherical shape; a distorted spherical shape; a cylindrical shape; a polygonal column (e.g., a triangular column, quadrangular column, a pentagonal column, etc.); or a block shape having a cross-section of various polygons or a cross-section of a circle, but is not limited thereto. That is, in Step (B), the mixture may include a step of manufacturing a formed article formed into various three-dimensional shapes described above.

In addition, the mixture may be formed using a forming frame (e.g., a mold, etc.) having various three-dimensional shapes described above.

In particular, the method of forming the mixture in Step (B) above may use various forming methods commonly used for food forming, but may include, for example, forming using a method of extrusion forming.

When the mixture is extrusion-formed in Step (B) above, it may include, for example, forming using a Koffens forming machine.

The formed product of Step (B) above is not limited with regard to the size after forming, but for example, the average diameter when the formed product has a spherical or distorted spherical shape, the average length of the diagonal line passing through the center of the bottom surface when the formed product has a polygonal column, the average diameter of the bottom surface when the formed product has a cylindrical shape, or the average diameter of the base, or the average length of the diagonal passing through the center of the bottom surface when the formed product has a block shape may have a range selected from the group consisting of one lower limit selected among 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, and 55 mm, and one upper limit selected among 100 mm, 95 mm, 90 mm, 85 mm, 80 mm, 75 mm, 70 mm, 69 mm, 68 mm, 67 mm, 66 mm, 65 mm, 64 mm, 63 mm, 62 mm, 61 mm, 60 mm, 59 mm, 58 mm, 57 mm, 56 mm, and 55 mm.

In addition, the average diameter when the formed product has a spherical or distorted spherical shape, or the average height when the formed product has a polygonal column, cylindrical shape, or block shape may have a range selected from the group consisting of one lower limit selected among 10 mm, 11 mm, 12 mm, 13 mm, 14 mm, and 15 mm, and one upper limit selected among 50 mm, 45 mm, 40 mm, 35 mm, 30 mm, 25 mm, 20 mm, 19 mm, 18 mm, 17 mm, 16 mm, and 15 mm, but is not limited thereto.

Step (C) above is a step of steaming the formed product formed in Step (B) above, and while undergoing the step of steaming the formed product in Step (C) above, the attachment force of the formed product can be stronger thus increasing the shape retaining ability or may also play a role in improving the texture and flavor of frozen blocks and frozen food using the same.

Step (C) above may include a step of steaming so that the central temperature of the formed product is 70°C or higher, or more specifically, the central temperature of the formed product may include a temperature to satisfy the temperature range selected from the group consisting of one lower limit selected among 70.1°C or higher, 70.2°C or higher, 70.3°C or higher, 70.4°C or higher, 70.5°C or higher, 70.6°C or higher, 70.7°C or higher, 70.8°C or higher, 70.9°C or higher, 71°C or higher, 71.1°C or higher, 71.2°C or higher, 71.3°C or higher, 71.4°C or higher, 71.5°C or higher, 71.6°C or higher, 71.7°C or higher, 71.8°C or higher, 71.9°C or higher, 72°C or higher, 72.1°C or higher, 72.2°C or higher, 72.3°C or higher, 72.4°C or higher, 72.5°C or higher, 72.6°C or higher, 72.7°C or higher, 72.8°C or higher, 72.9°C or higher, 73°C or higher, 73.1°C or higher, 73.2°C or higher, 73.3°C or higher, 73.4°C or higher, 73.5°C or higher, 73.6°C or higher, 73.7°C or higher, 73.8°C or higher, 73.9°C or higher, 74°C or higher, 74.1°C or higher, 74.2°C or higher, 74.3°C or higher, 74.4°C or higher, 74.5°C or higher, 74.6°C or higher, 74.7°C or higher, 74.8°C or higher, 74.9°C or higher, and 75°C or higher, and one upper limit selected among 85°C or below, 84.9°C or below, 84.8°C or below, 84.7°C or below, 84.6°C or below, 84.5°C or below, 84.4°C or below, 84.3°C or below, 84.2°C or below, 84.1°C or below, 84°C or below, 83.9°C or below, 83.8°C or below, 83.7°C or below, 83.6°C or below, 83.5°C or below, 83.4°C or below, 83.3°C or below, 83.2°C or below, 83.1°C or below, 83°C or below, 82.9°C or below, 82.8°C or below, 82.7°C or below, 82.6°C or below, 82.5°C or below, 82.4°C or below, 82.3°C or below, 82.2°C or below, 82.1°C or below, 82°C or below, 81.9°C or below, 81.8°C or below, 81.7°C or below, 81.6°C or below, 81.5°C or below, 81.4°C or below, 81.3°C or below, 81.2°C or below, 81.1°C or below, 81°C or below, 80.9°C or below, 80.8°C or below, 80.7°C or below, 80.6°C or below, 80.5°C or below, 80.4°C or below, 80.3°C or below, 80.2°C or below, 80.1°C or below, 80°C or below, 79.9°C or below, 79.8°C or below, 79.7°C or below, 79.6°C or below, 79.5°C or below, 79.4°C or below, 79.3°C or below, 79.2°C or below, 79.1°C or below, 79°C or below, 78.9°C or below, 78.8°C or below, 78.7°C or below, 78.6°C or below, 78.5°C or below, 78.4°C or below, 78.3°C or below, 78.2°C or below, 78.1°C or below, and 78°C or below. For example, Step (C) above may include a step of steaming so that the central temperature of the formed product becomes a temperature of 70°C to 85°C, 71°C to 84°C, 72°C to 83°C, 73°C to 82°C, 74°C to 81°C, or 75°C to 80°C.

The central temperature means the temperature inside the formed product, and the insider of the formed product means an inner part surrounded by the outer surface in which the formed product is in contact with air. The central temperature of the formed product may mean a temperature of a portion inside the formed product, or may mean an arithmetic average of temperatures of a portion of the interior of the formed product. The central temperature of the formed product may be measured using a commonly used cooking thermometer, but is not limited thereto.

In order to satisfy the central temperature of the formed product as described above, for example, Step (C) above may be to perform steaming at a temperature range selected from the group consisting of one lower limit selected among 90°C, 91°C, 92°C, 93°C, 94°C, and 95°C, and one upper limit selected among 100°C, 99°C, 98°C, 97°C, 96°C, and 95°C. In addition, Step (C) above may include a step of steaming at a time range selected from the group consisting of one lower limit selected among 3 minutes, 3.1 minutes, 3.2 minutes, 3.3 minutes, 3.4 minutes, 3.5 minutes, 3.6 minutes, 3.7 minutes, 3.8 minutes, 3.9 minutes, and 4 minutes, and one upper limit selected among 5 minutes, 4.9 minutes, 4.8 minutes, 4.7 minutes, 4.6 minutes, 4.5 minutes, 4.3 minutes, 4.2 minutes, 4.1 minutes, and 4 minutes.

Specifically, Step (C) above may include steaming the formed product at a temperature from 95°C to 99°C for 3 to 5 minutes. When the temperature and/or time of the steaming step satisfies the above range, the formed product has excellent shape retaining ability even after steaming, and thus raw materials such as meat and vegetables may not collapse even after steaming.

Additionally in Step (C) above, as the method of steaming the formed product, any conventional method of steaming food may be used as long as it can satisfy the above temperature and/or time conditions. For example, the formed product may be steamed by way of placing the formed box in a steam box, but the present disclosure is not limited thereto.

Step (D) above is a step of forming a frozen block by freezing the formed product steamed in Step (C) above, and may include freezing the steamed formed product at a temperature from -50°C to -30°C.

Step (D) above may be to freeze the central temperature of the steamed formed product to a temperature range selected from the group consisting of one lower limit selected among -10°C or higher, -9.9°C or higher, -9.8°C or higher, -9.7°C or higher, -9.6°C or higher, -9.5°C or higher, -9.4°C or higher, -9.3°C or higher, -9.2°C or higher, -9.1°C or higher, -9°C or higher, -8.9°C or higher, -8.8°C or higher, -8.7°C or higher, -8.6°C or higher, -8.5°C or higher, -8.4°C or higher, -8.3°C or higher, -8.2°C or higher, -8.1°C or higher, and -8°C or higher, and one upper limit selected among -5°C or below, -5.1°C or below, -5.2°C or below, -5.3°C or below, -5.4°C or below, -5.5°C or below, -5.6°C or below, -5.7°C or below, -5.8°C or below, -5.9°C or below, -6°C or below, -6.1°C or below, -6.2°C or below, -6.3°C or below, - 6.4°C or below, -6.5°C or below, -6.6°C or below, -6.7°C or below, -6.8°C or below, -6.9°C or below, and -7°C or below. For example, Step (D) above may be to freeze the central temperature of the steamed formed product to a temperature range of -10°C to -5°C, -9°C to -6°C, or -8°C to -7°C.

The freezing step can be used without limitation as long as it is a conventional method that can freeze food. For example, it may include a method of freezing by a blowing type freezing method, an alcohol immersion freezing method, a liquid nitrogen immersion freezing method, or a method of freezing by a plurality of these methods, but is not limited thereto.

The frozen vegetables included in the frozen block as described above have excellent effects in that the frozen vegetables have a superior texture compared to freeze-dried vegetables, the process is also simple because the frozen vegetables can be prepared only by freezing without a drying process, and is advantageous in terms of the processing cost.

The frozen block formed in Step (D) above is not limited with regard to the size, but for example, the average diameter when the frozen block has a spherical or distorted spherical shape, the average length of the diagonal line passing through the center of the bottom surface when the frozen block has a polygonal column, the average diameter of the bottom surface when the frozen block has a cylindrical shape, or the average diameter of the base, or the average length of the diagonal passing through the center of the bottom surface when the frozen block has a block shape may have a range selected from the group consisting of one lower limit selected among 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, and 55 mm, and one upper limit selected among 100 mm, 95 mm, 90 mm, 85 mm, 80 mm, 75 mm, 70 mm, 69 mm, 68 mm, 67 mm, 66 mm, 65 mm, 64 mm, 63 mm, 62 mm, 61 mm, 60 mm, 59 mm, 58 mm, 57 mm, 56 mm, and 55 mm.

In addition, the average diameter when the frozen block has a spherical or distorted spherical shape, or the average height when the frozen block has a polygonal column, cylindrical shape, or block shape may have a range selected from the group consisting of one lower limit selected among 10 mm, 11 mm, 12 mm, 13 mm, 14 mm, and 15 mm, and one upper limit selected among 50 mm, 45 mm, 40 mm, 35 mm, 30 mm, 25 mm, 20 mm, 19 mm, 18 mm, 17 mm, 16 mm, and 15 mm, but is not limited thereto.

After Step (D) above, a step of packaging the frozen block may be further included.

### Frozen block

In addition, another aspect of the present disclosure may provide a frozen block which includes meat, salts, vegetables, and alpha starch in which the meat and vegetables are attached to each other, in which when the frozen block is placed in water, irradiated by a microwave of 2.45 GHz and 700 W for 2 minutes, and stirred, 80 wt% or more of the meat and vegetables, based on the total weight of the frozen block including the meat and vegetables, are detached from each other within 1 minute immediately after stirring.

What is meant by that the meat and vegetables are attached may refer to a form in which the meat and vegetables are conjugated to each other by the attachment component including the salt-soluble protein described above.

What is meant by that the meat and vegetables are detached may mean that the meat and vegetables, which are attached by the attachment component including the salt-soluble protein, are detached from each other; for example, may mean that based on the total weight of the frozen block including meat and vegetables, the meat and vegetables are detached in an amount of 80 wt% or more, 81 wt% or more, 82 wt% or more, 83 wt% or more, 84 wt% or more, 85 wt% or more, 86 wt% or more, 87 wt% or more, 88 wt% or more, 89 wt% or more, 90 wt% or more, 91 wt% or more, 92 wt% or more, 93 wt% or more, 94 wt% or more, 95 wt% or more, 96 wt% or more, 97 wt% or more, 98 wt% or more, 99 wt% or more, or 100 wt%.

More specifically, it may mean that the average diameter when the frozen block has a spherical or distorted spherical shape, the average length of the diagonal line passing through the center of the bottom surface when the frozen block has a polygonal column, the average diameter of the bottom surface when the frozen block has a cylindrical shape, or the average diameter of the base, or the average length of the diagonal passing through the center of the bottom surface when the frozen block has a block shape may have a range selected from the group consisting of one lower limit selected among 30 mm, 31 mm, 32 mm, 33 mm, 34 mm, 35 mm, 36 mm, 37 mm, 38 mm, 39 mm, 40 mm, 41 mm, 42 mm, 43 mm, 44 mm, 45 mm, 46 mm, 47 mm, 48 mm, 49 mm, 50 mm, 51 mm, 52 mm, 53 mm, 54 mm, and 55 mm, and one upper limit selected among 100 mm, 95 mm, 90 mm, 85 mm, 80 mm, 75 mm, 70 mm, 69 mm, 68 mm, 67 mm, 66 mm, 65 mm, 64 mm, 63 mm, 62 mm, 61 mm, 60 mm, 59 mm, 58 mm, 57 mm, 56 mm, and 55 mm; and when the frozen block has a polygonal column, cylindrical shape, or block shape, in the case where the average height has a range selected from the group consisting of one lower limit selected among 10 mm, 11 mm, 12 mm, 13 mm, 14 mm, and 15 mm, and one upper limit selected among 50 mm, 45 mm, 40 mm, 35 mm, 30 mm, 25 mm, 20 mm, 19 mm, 18 mm, 17 mm, 16 mm, and 15 mm, if one frozen block is placed in 100 g to 400 g of water at 95°C or higher, irradiated by a microwave of 2.45 GHz and 700 W for 2 minutes, and stirred at a rate of 85 rpm to 90 rpm, 80 wt% or more of the meat and vegetables, based on the total weight of the frozen block including the meat and vegetables, are detached from each other within 1 minute immediately after stirring (i.e., within 1 minute after starting the stirring), in an amount of 80 wt% or more, 81 wt% or more, 82 wt% or more, 83 wt% or more, 84 wt% or more, 85 wt% or more, 86 wt% or more, 87 wt% or more, 88 wt% or more, 89 wt% or more, 90 wt% or more, 91 wt% or more, 92 wt% or more, 93 wt% or more, 94 wt% or more, 95 wt% or more, 96 wt% or more, 97 wt% or more, 98 wt% or more, 99 wt% or more, or 100 wt%, based on the total weight of the frozen block including meat and vegetables.

The step of irradiating of a microwave may be using a microwave oven, etc.

The water includes edible water, and may be water (or boiling water) at 95°C or higher at atmospheric pressure.

In addition, the stirring speed of the stirring may include stirring in the range of 85 rpm to 90 rpm, 85 rpm to 89 rpm, 85 rpm to 88 rpm, 85 rpm to 87 rpm, or 86 rpm to 90 rpm.

That is, since the frozen block can be loosened to an edible level (i.e., 80 wt% or more of the meat and vegetables are desorbed from each other based on the total weight of the frozen block including the meat and vegetables) within the frozen food containing the frozen block under the above conditions, it can be quickly provided to consumers.

The frozen block may be prepared according to the method for manufacturing a frozen block described above.

Regarding the meat, salts, vegetables, and alpha starch, those described above in relation to meat, salts, vegetables, and alpha starch can be applied in the same manner.

The meat may be contained in an amount of 10 wt% to 25 wt% based on the total weight of the frozen block.

The meat may be cut to a size of 0.1 mm to 15 mm in at least one of width, length, and height.

The vegetables may be contained in an amount of 60 wt% or more and less than 80 wt% based on the total weight of the frozen block.

The vegetables may be cut to a size of 5 mm to 15 mm in at least one of width, length, and height.

The meat and the salts may be mixed in a weight ratio of 2:1 to 20:1.

The meat and the alpha starch may be mixed in a weight ratio of 1:1 to 25:1.

The alpha starch may include at least one selected from the group consisting of corn alpha starch, waxy corn alpha starch, alpha rice flour, alpha tapioca starch, and a mixture thereof.

The frozen block is a food that can be distributed in a frozen state, and has the effect of preservation without collapsing its shape even during long-term frozen distribution and/or storage. Furthermore, the frozen block can be consumed after irradiation of a microwave of 2.45 GHz and 700 W, the flavor and/or fragrance, texture, and/or sensory quality are excellent even after cooking by irradiating a microwave as described above.

### Frozen food containing frozen blocks

Still another aspect of the present disclosure provides a frozen food which includes a frozen block, in which the frozen block includes meat, salts, vegetables, and alpha starch in which the meat and vegetables are attached to each other, and in which when the frozen block is placed in water, irradiated by a microwave of 2.45 GHz and 700 W for 2 minutes, and stirred, 80 wt% or more of the meat and vegetables, based on the total weight of the frozen block including the meat and vegetables, are detached from each other within 1 minute immediately after stirring.

Regarding the frozen block, meat, salts, vegetables, alpha starch, water, microwave, stirring, and detachment, the above-mentioned frozen block, meat, salts, vegetables, alpha starch, water, microwave, stirring, and detachment can be applied in the same manner.

The frozen food may refer to a food which is prepared to enable distribution in a frozen state by freezing edible food, which can be consumed after cooking using the microwave described above.

The frozen food may further include a frozen sauce in addition to the frozen block.

The frozen sauce, which is one for increasing the taste, flavor, sweetness, acidity, and/or fragrance, etc. of frozen food in addition to the frozen block, may refer to a type of sauce and/or seasoning packaged in a pouch or pack, etc., and it may be one in the frozen food that is included in a separately packaged form without being mixed with the frozen block.

The frozen sauce can be used without limitation as long as it is a sauce and/or seasoning commonly used for food, for example, a sagol (beef bone) sauce, a yukgaejang (spicy beef soup) sauce, a doenjang (soybean paste) sauce, a gochujang (red pepper paste) sauce, an anchovy stock sauce, a mixture thereof, etc.

The frozen sauce may be in a liquid form (a frozen liquid sauce), may be in a solid form (a frozen solid sauce), or may be in powder form (a frozen powder sauce), but is not limited thereto.

The frozen sauce may be prepared by freezing the sauce and/or seasoning after packaging. In particular, as the freezing method, a method commonly used for freezing food may be used without limitation. Alternatively, the freezing method of the frozen block described above may be applied in the same manner.

The frozen food may further include a frozen solid product. The frozen solid product, which is a main material of frozen food, may include a reference material for classifying types of the frozen food.

The frozen solid product may be included in a separately packaged form without being mixed with the frozen block in the frozen food. That is, the frozen block, the frozen sauce, and the frozen solid product may be included in the frozen food in an independently packaged form.

The frozen solid product is a solid product of raw materials including meat, fish, seafood, seaweed, grains, and/or vegetables, etc., and may include processed solid products including dumpling (jiaozi), rice cake, steak, jang-jorim, chicken, sea mustard, tofu, jeyuk(stir-fried pork), bibimbap (mixed rice), jjambbong (noodle soup with red, spicy seafood- or pork-based broth flavored with gochugaru) rice, squid rice bowl, bulgogi rice bowl, buldak (heavily spiced, barbecued chicken) rice bowl, jeyuk (stir-fried pork) rice bowl, bean sprout soup with rice, pollack soup, seaweed soup, yukgaejang (spicy beef soup), kimchi-jjigae (kimchi stew), sagol gomtang (beef bone stock), haejang-guk (hangover soup), chicken gomtang (chicken stock), ugeoji-guk (soybean paste soup with cabbage), doenjang-guk (soybean paste soup), and budae-jjigae (spicy sausage stew), but are not limited thereto. Additionally, the processed solid product may be prepared by a commonly known method for manufacturing the corresponding processed solid product, or the processed solid product may be prepared by further adding sugars, salts, spices, seasonings, flavor enhancers, additives, mixtures thereof, etc., in addition to the raw materials described above.

The frozen solid product may be prepared by freezing the raw material and/or processed solid product after packaging. In particular, as the freezing method, any method commonly used for freezing food can be used without limitation. Alternatively, the freezing method of the frozen block described above may be applied in the same manner.

The water includes edible water, and may be water at room temperature (10°C to 30°C) at atmospheric pressure, or water at 95°C or higher at atmospheric pressure (or boiling water).

### Frozen food for microwave cooking

In addition, still another aspect of the present disclosure provides a frozen food for microwave cooking in which a frozen block is contained in a predetermined container, in which the frozen block includes meat, salts, vegetables, and alpha starch where the meat and vegetables are attached to each other, and in which when the frozen food is cooked by placing the frozen block in water in the container followed by irradiation by a microwave.

The frozen food may further include a frozen sauce in addition to the frozen block.

The frozen food may further include a frozen solid product. The frozen solid product, which is a main material of frozen food, may include a reference material for classifying types of the frozen food.

With regard to the meat, salts, vegetables, alpha starch, a frozen block, a frozen sauce, a frozen solid product, water, and a microwave, those described on the above-described meat, salts, vegetables, alpha starch, frozen block, frozen sauce, frozen solid product, water, and microwave can be applied in the same manner.

The container is for accommodating the frozen block, frozen sauce and/or frozen solid product, and the container may be used without limitation as long as it has a size for accommodating the frozen block, frozen sauce, and/or frozen solid product.

The container should be made of a material that enables microwave cooking, that is, a material which allows a microwave to reach to a frozen block, frozen sauce and/or frozen solid product inside the container by passing through the same, should also have heat resistance according to a temperature increase, and may be a container made of a material that does not cause deformation or decomposition of the container. In addition, the container may be one that can accommodate water at room temperature or water at 80°C or higher in the container when the frozen food is cooked.

The container may further include a lid and/or cover for sealing, tight enclosure, and/or packaging the contents contained in the container.

In addition, the container may have a predetermined shape, and any shape suitable for accommodating the frozen block, frozen sauce, and/or frozen solid product may be used without limitation. For example, the container may refer to a container having a cup shape or bowl shape with a circular, oval, or polygonal bottom surface.

The frozen food for microwave cooking, which is prepared for distribution in a frozen state by freezing edible food, may mean one which can be consumed after cooking using the microwave described above.

The frozen food for microwave cooking may be prepared including packaging after putting the frozen block, frozen sauce, and frozen solid product into the container. The order of putting them into the container is not limited, and it may refer to packaging after putting the frozen block, frozen sauce, and frozen solid product, which are individually packaged as described above, into the container.

The term "for microwave cooking" means that the frozen food can be cooked using microwaves, for example, microwave cooking is possible using a microwave cooking device (e.g., a microwave oven, an electric range, etc.).

When the frozen food for microwave cooking is cooked using a microwave cooking device (e.g., an electric range) after adding water into the container, the attached parts of vegetables and meat in the frozen block are easily detached from each other, making it easier to consume.

The water includes edible water, and it may be water at room temperature (10°C to 30°C) at atmospheric pressure, water at 80°C or higher at atmospheric pressure, water at 95°C or higher at atmospheric pressure or boiling water.

The microwave may have a frequency of 2.45 GHz and an output of 700 to 1,000 W.

The cooking using microwaves may be processed such that cooking is performed for 3.5 to 4 minutes when a microwave wave of 2.45 GHz and 700 W is used after adding water at 95°C or higher; cooking is performed 3 to 3.5 minutes when a microwave wave of 2.45 GHz and 1,000 W is used after adding water at 80°C or higher; 5 to 5.5 minutes when a microwave wave of 2.45 GHz and 700 W is used after adding water at 20°C or lower; or 4 to 4.5 minutes when a microwave wave of 2.45 GHz and 1,000 W is used after adding water at 95°C or higher; and the cooking time can be adjusted according to the temperature of the added water and/or the output of the microwave.

According to the above-mentioned recipe using microwaves, the frozen food for microwave cooking may be processed, for example, such that when water is added up to the level line marked inside the container and cooked for 2 minutes in an electric range at 2.45 GHz and 700 W and stirred, 80 wt% or more of the meat and vegetables (based on the total weight of the frozen block including the meat and vegetables in the frozen block) are desorbed from each other within 1 minute immediately after stirring.

The frozen food has an advantage in that when a consumer consumes the frozen food, it can be cooked very quickly and converted into an edible state, and thus can provide a highly-preferred meal to consumers in the modern society where simple meals are required.

### ADVANTAGEOUS EFFECTS

According to the method of manufacturing a frozen block according to the present disclosure, the method has an advantage in that as the attachment force of raw materials (especially meat and vegetables) increases by a salt-soluble protein formed through meat and salts, the formed product does not collapse but maintains its shape even after steaming.

In addition, since the frozen block has a characteristic (an excellent loosening property) that the frozen block is easily loosened after cooking using a microwave to be consumed, it has effects of providing not only an excellent texture to consumers, but also an aesthetic feeling.

Furthermore, when the frozen food including the frozen block or the frozen food for microwave cooking is delivered to consumers, it can be cooked quickly. Therefore, it also provides the advantage of high preference for consumers who enjoy simple meals.

### BRIEF DESCRIPTION OF THE DRAWINGS

Fig. 1 is a view showing the results of evaluating the loosening property of the frozen blocks of Preparation Examples 1 to 4 according to Experimental Example 1 of the present disclosure.
Fig. 2 is a view showing the results of evaluating the loosening property of the frozen blocks of Preparation Examples 6 to 11 according to Experimental Example 2 of the present disclosure.

### MODE FOR CARRYING OUT THE INVENTION

Hereinafter, the present disclosure will be described in more detail.

However, the following Examples specifically exemplify the present disclosure, and the content of the present disclosure is not limited by the following Examples.

### <Preparation Example - frozen block>

Frozen blocks having a circular cross section with a diameter of 57 mm to 65 mm and a height of 15 mm to 20 mm were prepared as follows: 1) the raw materials are mixed according to the composition and the mixing order shown in Table 1 below, 2) is subjected to extrusion forming by applying a mold with a diameter of 57 mm and a height of 15 mm using a Koffenser forming machine, 3) steamed at 95°C by steaming for 4 minutes to maintain the core temperature at 70°C, and 4) is frozen by passing the resultant through at - 30°C for 30 to 40 minutes using a blow-type freezer.

**[Table 1]**

| Categor y | Raw Mater ial | Preparation Example 1 | | Preparation Example 2 | | Preparation Example 3 | | Preparation Example 4 | | Preparation Example 5 | |
|---|---|---|---|---|---|---|---|---|---|---|---|
| | | Mixing Amount (g) | Mixing Ratio (parts by weight ) | Mixing Amount (g) | Mixing Ratio (parts by weight ) | Mixing Amount (g) | Mixing Ratio (parts by weight ) | Mixing Amount (g) | Mixing Ratio (parts by weight ) | Mixing Amount (g) | Mixing Ratio (parts by weight ) |
| Primary Mixing (5 Min) | Salt | 8 | 1.48 | 10 | 1.91 | 12 | 2.37 | 6 | 1.07 | 6 | 0.73 |
| | IG | 4 | 0.74 | 4 | 0.76 | 4 | 0.79 | 4 | 0.71 | 4 | 0.49 |
| | Pork A1 (3 mm chopping) | 100 | 18.45 | 80 | 15.27 | 60 | 11.86 | 120 | 21.43 | 120 | 14.63 |
| | Froze n Garli c | 20 | 3.69 | 20 | 3.82 | 20 | 3.95 | 20 | 3.57 | 20 | 2.44 |
| Seconda ry Mixing (1 Min 30 Sec) | Shiit ake (3-5 mm thick slice, 4-8 mm long) | 60 | 11.07 | 60 | 11.45 | 60 | 11.86 | 60 | 10.71 | 60 | 7.32 |
| | Leek (widt h *leng th = 10 mm *10 mm) | 340 | 62.73 | 340 | 64.89 | 340 | 67.19 | 340 | 60.71 | 600 | 73.17 |
| Tertiar y Mixing (1 Min 30 Sec) | Corn Alpha Stare h | 10 | 1.85 | 10 | 1.91 | 10 | 1.98 | 10 | 1.79 | 10 | 1.22 |
| Total | | 542 | 100 | 524 | 100 | 506 | 100 | 560 | 100 | 820 | 100 |

### <Experimental Example 1>: Measurement of shape retaining ability and loosening properties after steaming

Using the 10 frozen blocks prepared in Preparation Examples 1 to 5 as samples, the results of visually confirming the ratio (number check) of samples that collapsed after steaming in Step 3) of Examples and Comparative Examples above are shown in Table 2 below.

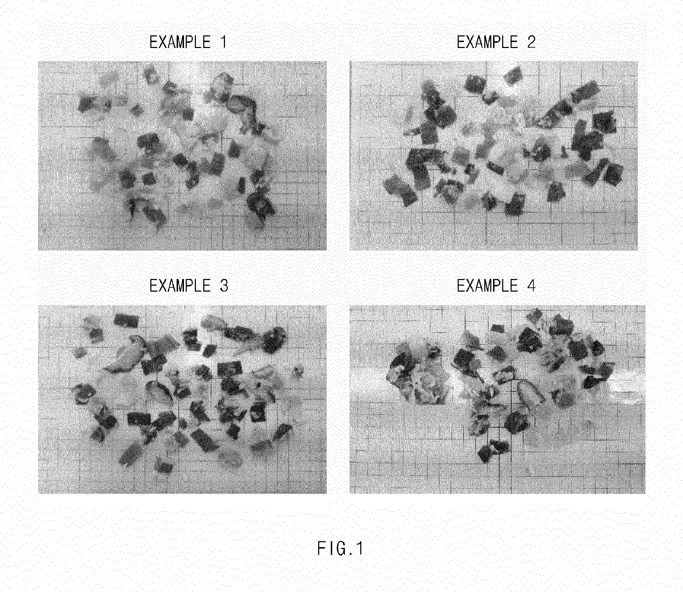

In addition, each of the frozen blocks of Preparation Examples 1 to 5 above was added into 300 g of boiling water (95°C or higher at atmospheric pressure), irradiated with a microwave of 2.45 GHz and 700 W for 2 minutes, and the mixture was stirred at a stirring speed of 85-90 rpm for 2 minutes, and the time (loosening time) when 90 wt% of meat and vegetables were detached (loosened) based on the total weight of the frozen block, was measured and is shown in Table 2 below. The picture is shown in Fig. 1.

**[Table 2]**

| Category | Preparation Example 1 | Preparation Example 2 | Preparation Example 3 | Preparation Example 4 | Preparation Example 5 |
|---|---|---|---|---|---|
| Observation Result of Collapse after Steaming in Step 3) | no collapse | no collapse | 22% collapse observed | no collapse | 55% collapse observed |
| Loosening Time (Sec) | 31.7±11 | 23.3±10 | 22±13 | no loosening even after 2 minutes of stirring | not testable |

According to Table 2, in the case of Preparation Example 3 where the content of pork (meat) was less than 15 wt%, it was confirmed that the garnish was easily loosened after microwave irradiation. However, as collapse was observed in the steaming stage, it appeared that the shape retaining ability was insufficient; therefore, it was confirmed that the frozen block of the present disclosure required the content of pork (meat) to be 15 wt% or more based on the total weight of the frozen block. In addition, even when the content of pork (meat) was about 15 wt%, in the case of Preparation Example 5, where the content of vegetables was more than 80 wt%, collapse was observed after steaming more than 55% of the sample; therefore, it was confirmed that the content of vegetables should be less than 80 wt% based on the total weight of the frozen block.

Meanwhile, in the case of Preparation Example 4, where the mixing weight ratio of salts to pork (meat) was relatively small, collapse was not observed during the steaming step, and even when the sample was irradiated by a microwave for 2 minutes and stirred for 2 minutes, it could be observed that there was no loosening. However, in the case of Preparation Examples 1 and 2, it was confirmed that all of the frozen blocks were completely loosened in about 31.7 seconds and about 23.3 seconds, respectively.

### <Experimental Example 2>: Measurement of shape retaining ability and loosening property according to starch

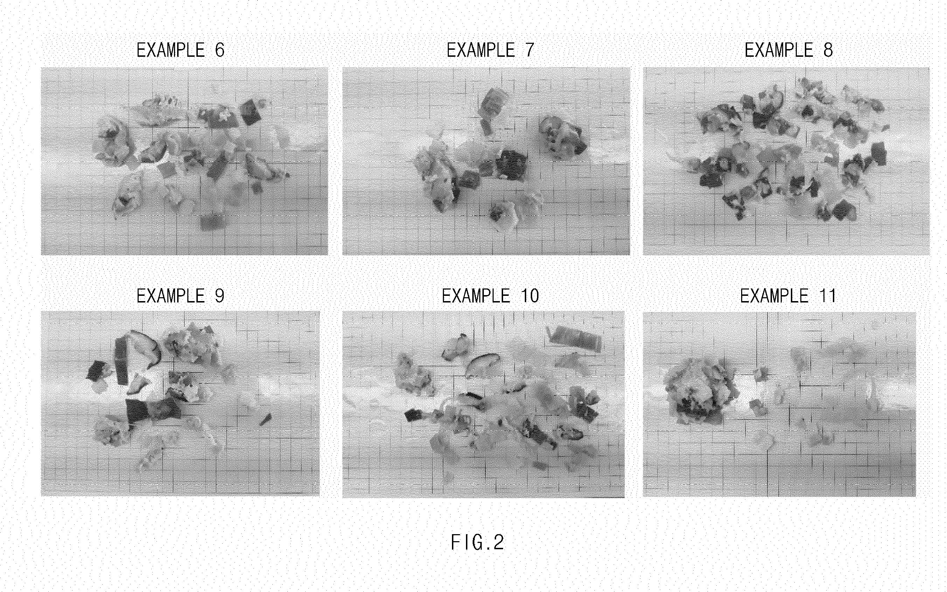

After manufacturing the frozen blocks in the composition and mixing order shown in Table 3 below, the results of the shape retaining ability and loosening property according to the type of alpha starch and the content of alpha starch observed in the same manner as in Experimental Example 1 are shown in Table 4 and Fig. 2 below.

**[Table 3]**

| Categ ory | Raw Mater ial | Preparation Example 6 | | Preparation Example 7 | | Preparation Example 8 | | Preparation Example 9 | | Preparation Example 10 | | Preparation Example 11 | |
|---|---|---|---|---|---|---|---|---|---|---|---|---|---|
| | | Mixin 9 Amoun t (g) | Mixin 9 Ratio (part s by weigh t) | Mixin 9 Amoun t (g) | Mixin 9 Ratio (part s by weigh t) | Mixin 9 Amoun t (g) | Mixin 9 Ratio (part s by weigh t) | Mixin 9 Amoun t (g) | Mixin 9 Ratio (part s by weigh t) | Mixin 9 Amoun t (g) | Mixin 9 Ratio (part s by weigh t) | Mixin 9 Amoun t (g) | Mixin 9 Ratio (part s by weigh t) |
| Prima ry Mixin 9 (5 Min) | Salt | 6 | 1.08 | 6 | 1.09 | 6 | 1.05 | 6 | 1.02 | 6 | 1.07 | 6 | 1.07 |
| | IG | 4 | 0.72 | 4 | 0.73 | 4 | 0.70 | 4 | 0.68 | 4 | 0.71 | 4 | 0.71 |
| | Pork A1 (3 mm chopping) | 120 | 21.62 | 120 | 21.82 | 120 | 21.05 | 120 | 20.34 | 120 | 21.43 | 120 | 21.43 |
| | Froze n Garli c | 20 | 3.60 | 20 | 3.64 | 20 | 3.51 | 20 | 3.39 | 20 | 3.57 | 20 | 3.57 |
| Secon dary Mixin g 1 Min 30 Sec) | Shiit ake (3-5 mm thick slice, 4-8 mm long) | 60 | 10.81 | 60 | 10.91 | 60 | 10.53 | 60 | 10.17 | 60 | 10.71 | 60 | 10.71 |
| | Leek (widt h *leng th = 10 mm *10 mm) | 340 | 61.26 | 340 | 61.82 | 340 | 59.65 | 340 | 57.63 | 340 | 60.71 | 340 | 60.71 |
| Terti ary Mixin 9 (1 Min 30 Sec) | Corn Alpha Stare h | 5 | 0.90 | 0 | 0 | 20 | 3.51 | 40 | 6.78 | 0 | 0 | 0 | 0 |
| | Alpha Rice Flour | 0 | 0 | 0 | 0 | 0 | 0 | 0 | 0 | 10 | 1.79 | 0 | 0 |
| | Avebe (Modi fied Stare h) | 0 | 0 | 0 | 0 | 0 | 0 | 0 | 0 | 0 | 0 | 10 | 1.79 |

**[Table 4]**

| Category | Preparation Example 6 | Preparation Example 7 | Preparation Example 8 | Preparation Example 9 | Preparation Example 10 | Preparation Example 11 |
|---|---|---|---|---|---|---|
| Observation Result of Collapse after Steaming in Step 3) | no collapse | Collapse observed | no collapse | no collapse | no collapse | no collapse but boggy property appears |
| Loosening Time (Sec) | 38.5±4 | 38.5±4 | 38.8±2.3 | 39.3±2 | 41.5±1 | no loosening |

According to Tables 3 and 4, in Preparation Example 7 where alpha starch was not used, it was confirmed that collapse was observed after steaming. According to Preparation Examples 4, 6, 8, and 9, it was confirmed that the loosening properties were similar in the range of 0.1 wt% to 10 wt% of alpha starch.

On the other hand, in the case of Preparation Example 11 using modified starch instead of alpha starch, there was no collapse after steaming, but showed a physical property of being boggy, which may cause problems in the forming process; additionally, it was confirmed that the frozen block was not loosened even when it was stirred after irradiating with a microwave for 2 minutes.

### <Preparation Example 12 - frozen food>

The prepared frozen block, the frozen sauce frozen by packaging a liquid sauce in a pouch, and the frozen solid product (*e.g*., dumpling) were put into a predetermined container and packaged to prepare an integrated frozen food.

The frozen food of Preparation Example 12 is a frozen food for microwave irradiation, and the label of the frozen food is indicated for electric range cooking. After cooking by an electric range, the attachment of the frozen block is released, and the vegetables and meat in the frozen block are loosened.
More specifically, with regard to the cooking of the frozen food, the cooking method may be guided by methods such as a method in which boiling water (water at 95°C or higher) is added into a container, irradiated with a microwave of 700 W for 3 minutes and 30 seconds, and the resultant is stirred without applying a force thereto; a method in which boiling water (water at 95°C or higher) is added into a container, irradiated with a microwave of 1,000 W for 3 minutes, and the resultant is stirred without applying a force thereto; cold water (water at 20°C or below) is added into a container, irradiated with a microwave of 700 W for 5 minutes and 30 seconds, and the resultant is stirred; cold water (water at 20°C or below) is added into a container, irradiated with a microwave of 1,000 W for 4 minutes and 30 seconds, and the resultant is stirred, *etc*.

## Claims

1. A method for manufacturing a frozen block, comprising:
(A) mixing meat, salts, vegetables, and alpha starch;
(B) forming the mixture;
(C) steaming the formed product; and
(D) freezing the steamed formed product.

2. The method of claim 1, wherein Step (A) comprises:
(a-1) forming a first raw material by mixing meat and salts;
(a-2) mixing vegetables with the first raw material to form a second raw material; and
(a-3) mixing alpha starch with the second raw material.

3. The method of claim 1, wherein in Step (A), the meat is contained in an amount of 10 wt% to 25 wt% based on the total weight of the frozen block.

4. The method of claim 1, wherein in Step (A), the vegetables are contained in an amount of 60 wt% or more and less than 80 wt% based on the total weight of the frozen block.

5. The method of claim 1, wherein in Step (A), the vegetables comprise those cut to a size of 5 mm to 15 mm in at least one of width, length, and height.

6. The method of claim 1, wherein in Step (A), the meat and the salts are mixed in a weight ratio of 2:1 to 20:1.

7. The method of claim 1, wherein in Step (A), the meat and the alpha starch are mixed in a weight ratio of 1:1 to 25:1.

8. The method of claim 1, wherein in Step (A), the alpha starch comprises at least one selected from the group consisting of corn alpha starch, waxy corn alpha starch, alpha rice flour, alpha tapioca starch, and a mixture thereof.

9. A frozen block comprising meat, salts, vegetables, and alpha starch in which the meat and vegetables are attached to each other,
wherein when the frozen block is placed in water, irradiated by a microwave of 2.45 GHz and 700 W for 2 minutes, and stirred, 80 wt% or more of the meat and vegetables, based on the total weight of the frozen block including the meat and vegetables, are detached from each other within 1 minute immediately after stirring.

10. The frozen block of claim 9, wherein the meat is contained in an amount of 10 wt% to 25 wt% based on the total weight of the frozen block.

11. The frozen block of claim 9, wherein the vegetables are contained in an amount of 60 wt% or more and less than 80 wt% based on the total weight of the frozen block.

12. The frozen block of claim 9, wherein the vegetables comprises those cut to a size of 5 mm to 15 mm in at least one of width, length, and height.

13. The frozen block of claim 9, wherein the meat and the salts are mixed in a weight ratio of 2:1 to 20:1.

14. The frozen block of claim 9, wherein the meat and the alpha starch are mixed in a weight ratio of 1:1 to 25:1.

15. The frozen block of claim 9, wherein the alpha starch comprises at least one selected from the group consisting of corn alpha starch, waxy corn alpha starch, alpha rice flour, tapioca alpha starch, and a mixture thereof.

16. A frozen food comprising a frozen block,
wherein the frozen block comprises meat, salts, vegetables, and alpha starch in which the meat and vegetables are attached to each other, and
wherein when the frozen block is placed in water, irradiated by a microwave of 2.45 GHz and 700 W for 2 minutes, and stirred, 80 wt% or more of the meat and vegetables, based on the total weight of the frozen block including the meat and vegetables, are detached from each other within 1 minute immediately after stirring.

17. The frozen food of claim 16, wherein the frozen block is the frozen block of any one of claims 10 to 15.

18. The frozen food of claim 16, wherein the frozen block further comprises a frozen sauce.

19. The frozen food of claim 18, wherein the frozen sauce comprises at least one selected from the group consisting of a sagol (beef bone) sauce, a yukgaejang (spicy beef soup) sauce, a doenjang (soybean paste) sauce, a gochujang (red pepper paste) sauce, an anchovy stock sauce, and a mixture thereof.

20. The frozen food of claim 16, wherein the frozen food further comprises a frozen solid product.

21. The frozen food of claim 20, wherein the frozen solid product comprises at least one selected from:
at least one raw material selected from meat, fish, seafood, seaweed, grains, and vegetables; and
at least one processed solid product selected from dumpling (jiaozi), rice cake, steak, jang-jorim, chicken, sea mustard, tofu, jeyuk (stir-fried pork), bibimbap (mixed rice), jjambbong (noodle soup with red, spicy seafood- or pork-based broth flavored with gochugaru) rice, squid rice bowl, bulgogi rice bowl, buldak (heavily spiced, barbecued chicken) rice bowl, jeyuk (stir-fried pork) rice bowl, bean sprout soup with rice, pollack soup, seaweed soup, yukgaejang (spicy beef soup), kimchi-jjigae (kimchi stew), sagol gomtang (beef bone stock), haejang-guk (hangover soup), chicken gomtang (chicken stock), ugeoji-guk (soybean paste soup with cabbage), doenjang-guk (soybean paste soup), and budae-jjigae (spicy sausage stew).

22. A frozen food for microwave cooking in which a frozen block is contained in a predetermined container,
wherein the frozen block comprises meat, salts, vegetables, and alpha starch in which the meat and vegetables are attached to each other, and
wherein when the frozen food is cooked by placing the frozen block in water in the container followed by irradiation by a microwave.

23. The frozen food of claim 22, wherein the water comprises at least one selected from the water at 10°C to 30°C at atmospheric pressure and the water at 80°C or higher at atmospheric pressure.

24. The frozen food of claim 22, wherein the microwave comprises a microwave with a frequency of 2.45 GHz and an output of 700 W to 1,000 W.

25. The frozen food of claim 22, wherein the frozen food further comprises a frozen sauce.

26. The frozen food of claim 22, wherein the frozen food further comprises a frozen solid product.
